# EUROPÄISCHE PATENTSCHRIFT

(11) **EP 2 226 179 B1**
(45) Veröffentlichungstag und Bekanntmachung des Hinweises auf die Patenterteilung: **11.04.2018**
(21) Anmeldenummer: 10153840.3
(22) Anmeldetag: 17.02.2010
(51) Int. Cl.: B29C 49/12, B29C 49/48, B67C 3/04, B67C 3/14, B29C 49/46, B65B 3/02

(54) **Verfahren und Vorrichtung zum Herstellen und Befüllen von dünnwandigen Getränkebehältern**
Device and method for manufacturing and filling thin-walled drink containers
Procédé et dispositif de fabrication et de remplissage de récipients de boissons à parois fines

(30) Priorität: 06.03.2009 DE 102009011583
(43) Veröffentlichungstag der Anmeldung: 08.09.2010
(60) Teilanmeldung: 18153352.2
(73) Patentinhaber: Krones AG, 93073 Neutraubling (DE)
(72) Erfinder: Hirdina, Jochen, 93073 Neutraubling (DE)
(74) Vertreter: Benninger, Johannes

(56) Entgegenhaltungen:
- EP-A1- 0 720 905
- EP-B1- 1 147 249
- DE-A1-102005 012 507
- US-A- 5 133 468
- US-A- 5 547 631
- US-A1- 2005 271 843
- Bilal Demirel ET AL: "Crystallization Behavior of PET Materials PET Malzemelerin Kristalizasyon Davranisi", Dergisi Cilt, 1 January 2011 (2011-01-01), pages 26-35, XP055362074, Retrieved from the Internet: URL:http://fbe.balikesir.edu.tr/dergi/2011 1/BAUFBE2011-1-3.pdf

## Beschreibung

Die Erfindung betrifft ein Verfahren sowie eine Vorrichtung zum Herstellen und Befüllen von dünnwandingen und/oder unter Wärmeeinwirkung zumindest teilweise forminstabilen PET-Faschen.

Bei der keimarmen Abfüllung von Getränken ist es bekannt, die im Kopfraum des Getränkebehälters enthaltene Luft zu verdrängen, bspw. durch Einbringen von flüssigem Stickstoff, wie dies bspw. aus der EP 0 481 019 B1 bekannt ist. Mit dem Zusetzen von flüssigem Stickstoff wird weitgehend der gesamte im Behälter enthaltene Luftsauerstoff verdrängt, wodurch eine bessere Haltbarkeit des Getränkes erreichbar ist.

Bei der Heißabfüllung von Getränken in PET-Behälter stellen darüber hinaus die Thermostabilität des Materials und die Vakuumstabilität des Behälters eine Herausforderung dar, denen durch verschiedene Maßnahmen begegnet werden kann. Die Thermostabilität von PET ist aufgrund des niedrigen Glaspunktes von ca. 75°C für Fülltemperaturen von sensiblen Produkten, die in der Regel in Temperaturbereichen zwischen 85°C und 92°C abgefüllt werden, nicht ausreichend. Deshalb muss das Material üblicherweise bei der Verarbeitung in der Streckblasmaschine thermisch kristallisiert werden. Dies wird über eine hohe Temperatur der verarbeiteten Vorformlinge (sog. Preformtemperatur) und geheizte Blasformen (120°C bis 160°C) realisiert. Dies hat jedoch einen deutlich höheren Energieverbrauch zur Folge, da bei diesen Verfahren eine zusätzliche Abkühlung des Behälters vor dem Entformen mittels Druckluft erforderlich wird. Ein weiterer Nachteil ist die eingeschränkte Ausstoßleistung aufgrund der notwendigen Kristallisierungszeit in der Form.

Der Ausgleich des durch Abkühlung bedingten Volumenschwundes des Füllguts kann über ein relativ aufwändiges Flaschendesign realisiert werden, wie dies bspw. aus der WO 2006/062829 A2 bekannt ist. Diese für heiß abfüllbare Behälter geeigneten Flaschen sind im Vergleich zu konventionellen Gestaltungen für kalt abgefüllte Behälter deutlich schwerer, aufwändiger in der Herstellung und somit auch deutlich teuerer. Angesichts hoher und in Zukunft weiter steigender Rohstoffpreise wird es aber zunehmend unwirtschaftlicher, die Vorteile einer Heißabfüllung über ein höheres Flaschengewicht zu erkaufen. Außerdem sind Flaschen mit Vakuumausgleichsflächen schwieriger zu etikettieren und haben eine teilweise deutlich reduzierte Stapelfähigkeit.

Aus diesem Grund offenbart die JP 06 263 190 A ein Verfahren zur Heißbefüllung von dünnwandigen Behältern, bei dem die Behälterstabilität nach der Abkühlphase durch Einbringung von flüssigem Stickstoff gewährleistet werden soll, da dessen Ausdehnung dem Schrumpfungsprozess durch die Abkühlung des Behälterinhalts entgegen wirkt.

Weiter offenbart die US 5,133,468 A eine Blasform zum Streckblasen von Behältern. Die Blasform umfasst einen ersten Teil, in welchem ein oberer Abschnitt des Behälters positioniert ist. Der erste Teil wird durch Heizelemente erwärmt, so dass ein Preform sich zu einem Behälter verformen kann. Zudem umfasst die Blasform einen zweiten Teil, in welchem der Bodenbereich des fertig geformten Behälters angeordnet ist. Gegenüber dem ersten Teil besitzt der zweite Teil eine geringere Temperatur.

Ein vorrangiges Ziel der Erfindung besteht darin, einen Prozessablauf für eine Behälterherstellung und -befüllung zu schaffen, der ausgehend von einem Vorformling über dessen Blasumformung zu einem Getränkebehälter sowie dessen Heißbefüllung eine verbesserte, möglichst zuverlässige und energieeffiziente Bereitstellung von befüllten Getränkebehältern gewährleisten kann. Dabei liegt ein Hauptaugenmerk in der Gewährleistung einer von der blasgeformten Behälterkontur möglichst geringen Formabweichung durch das nachfolgende Befüllen und Abkühlen der Behälter sowie des darin befindlichen Füllguts.

Dieses Ziel wird bei einem Verfahren mit den Merkmalen des unabhängigen Anspruchs 1 erreicht. Eine nicht erfinderische Variante des Verfahrens sieht vor, dass die Blasform über ein Kanalsystem von flüssigem Temperiermedium durchströmt wird. Für dieses Temperiermedium kann im Wesentlichen Wasser verwendet werden, sofern die Blasformtemperatur nicht über 100 °C liegt. Die Blasform ist üblicherweise an einen zentralen Verteiler in der Mitte der Blasmaschine über Schlauchleitungen angeschlossen. Durch die Blasform geht ein Netz aus Bohrungen, durch die das Temperiermedium strömt. Jede der zwei Blasformen (pro Blasstation) hat zwei Anschlüsse als Vor- und Rücklauf des Mediums. Dieses Medium überträgt in diesem großflächigen Bohrungslabyrinth die Wärme auf die Blasform, gemäß vorliegender Offenbarung in einem Temperaturbereich unterhalb von 110 °C. Der Boden der Blasform hat normalerweise separate Anschlüsse für einen zweiten Kreislauf mit anderer Temperatur. Die Bodentemperatur beträgt bevorzugt weniger als 30 °C, nach Möglichkeit bevorzugt weniger als 10 °C.

Ein besonderer Vorteil des offenbarten Verfahrens besteht darin, dass das Verfahren bei Temperaturen unterhalb 100 °C mit Wasser als Temperiermedium für die Blasformen arbeiten kann, und nicht - wie im bekannten Stand der Technik üblich - mit 130 bis 140 °C bei Öl. D.h., es kann vorteilhafterweise mit Wasser anstelle von Öl als Temperiermedium gearbeitet werden.

Bei einem herkömmlichen sog. Hotfill-Verfahren wird mit Blasformtemperaturen von ca. 130°C und Füllguttemperaturen von ca. 90°C gearbeitet. Dabei wird das verstreckte PET im Blasprozess gegen die heiße Formwand gedrückt, um die Spannungen aus dem Material herauszunehmen, so dass die PET-Flasche nach dem folgenden Kontakt mit dem heißen Füllgut zu einem späteren Zeitpunkt nicht mehr in die unverstreckte Vorform (Preform) zurückschrumpfen kann. Aufgrund der hierbei gebildeten Materialstruktur wird auch von spannungsarmen PET gesprochen.

Im Gegensatz zu diesen aus dem Stand der Technik bekannten Verfahren lässt die vorliegende Erfindung nur eine Blasformtemperatur von 80 bis 90 °C (bei einer Füllguttemperatur von ebenfalls ca. 90 °C) zu, damit noch Eigenspannungen im verstreckten PET erhalten bleiben, um die spätere Druckbeaufschlagung mit Stickstoff besser kompensieren zu können.

Von Vorteil kann es weiterhin sein, die Behälter ohne Zwischenschaltung eines Puffers oder Zwischenspeichers unmittelbar nach dem Blasvorgang dem Füllvorgang zuzuführen. Dies dient in erster Linie dazu, für alle Flaschen bzw. Behälter weitest gehend die gleichen Bedingungen (Feuchtigkeitsaufnahme, Abkühlung) herzustellen. D.h., es wird erfindungsgemäß kein Puffer zwischen Blasmaschine und Füller eingesetzt, sondern es wird jede Flasche in der gleichen Zeit zum Füller übergeben. Die Flaschen werden in diesem zwischengelagerten Transportsystem vorzugsweise auf Teilung gehalten. Die konstante Transportzeit zwischen Blasmaschine und Füller könnte bei Verwendung eines Puffers nicht gewährleistet werden.

Das erfindungsgemäße Verfahren hat den besonderen Vorteil, dass die Flaschenqualität auf einem sehr konstanten Niveau gehalten werden kann, da weitgehend immer der gleiche Schrumpfumfang und somit immer konstante Füllhöhen gewährleistet werden. Zudem hat die bevorzugte, jedoch nicht zwingend erforderliche bauliche, zeitliche und prozesstechnische Zusammenfassung der Schritte des Behälterformens und der Behälterbefüllung den Vorteil, dass alle für den einwandfreien Prozessablauf wichtigen Parameter wesentlich leichter konstant gehalten bzw. in gewünschter Weise beeinflusst werden können als dies bei herkömmlichen Verfahren der Fall ist.

Das erfindungsgemäße Verfahren dient zur Befüllung von dünnwandingen und/oder unter Wärmeeinwirkung zumindest teilweise forminstabilen PET-Flaschen mit geringer Wärmebeständigkeit mit einem flüssigen, heißen Füllgut, das in die PET-Flaschen abgefüllt wird, wonach diese mit einem Druckgas beaufschlagt und anschließend verschlossen werden. Gemäß der Erfindung werden die PET-Flaschen nach einem Blasformvorgang dem Füllvorgang zugeführt, so dass die nach dem Blasformvorgang noch warmen PET-Flaschen ohne größere Verzögerungen, ggf. mit einem Transportsystem, in dem die Flaschen abgekühlt werden, dem Füllvorgang zugeführt werden können. Die PET-Flaschen werden deshalb auf kurzen Wegen, insbesondere durch bauliche und/oder konstruktive Integration einer Blasstation mit einer nachgeschalteten Füllstation, geblasen, gefördert und mit der heißen Flüssigkeit befüllt.

Eine Ausführungsvariante des erfindungsgemäßen Verfahrens sieht vor, dass die PET-Flaschen während des Blasformvorgangs mittels einer flüssigkeitsgekühlten Reckstange behandelt und gereckt werden. Wahlweise können die PET-Flaschen während des Blasformvorgangs mittels einer gasgekühlten und/oder gasdurchströmten Reckstange behandelt und gereckt werden. Hierbei kann vorzugsweise vorgesehen sein, dass ein Flüssigkeits- oder Gasaustritt im Wesentlichen an einer zum Boden der zu formenden PET-Flasche gerichteten Stirnseite der Reckstange erfolgt. Auf diese Weise wird im Wesentlichen der Boden der PET-Flasche gekühlt; die Seitenwände sollten auch weitestgehend kühl sein, aber wichtiger ist ein kalter Boden.

Das Verfahren kann vorsehen, dass als Druckgas zur Beaufschlagung der gefüllten PET-Flaschen gasförmiger oder flüssiger Stickstoff verwendet wird. Der Stickstoff sorgt dafür, dass in den PET-Flaschen nach dem Abkühlen kein Unterdruck herrscht, so dass sich die relativ dünnwandigen und/oder biegeweichen PET-Flaschen nicht durch den Unterdruck in unerwünschter Weise verformen.

Das Füllgut wird typischerweise mit einer Temperatur größer als 60 °C, insbesondere mit einer Temperatur größer als 75 °C in die PET-Flaschen gefüllt. Das erfindungsgemäße Verfahren eignet sich besonders für Fülltemperaturen des flüssigen Füllguts zwischen ca. 80 °C und 95 °C, insbesondere zwischen ca. 85 °C und 92 °C. Der Fülldruck des nach dem Befüllen der PET-Flaschen mit flüssigem Füllgut eingebrachten Druckgases kann ca. 2 bar oder mehr betragen, so dass der innere Überdruck der abgekühlten PET-Flaschen noch größer ist als der atmosphärische Umgebungsdruck bei einer Füllguttemperatur von kleiner als 4 °C, was einer Lagerung der Flasche im Kühlschrank entspricht.

Mit der vorliegenden Erfindung wird ein gegenüber den bekannten Verfahren in wesentlichen Aspekten weiterentwickeltes und verbessertes Verfahren zur Heißabfüllung geliefert. Die Heißabfüllung findet nach wie vor in einem typischen Temperaturbereich statt, der meist zwischen ca. 85°C und 92°C liegen dürfte. Um den auftretenden Volumenschwund bei der Abkühlung der heißgefüllten Flüssigkeit zu kompensieren, wird mit Druckbeaufschlagung gearbeitet. Die Druckbeaufschlagung wird derzeit über Stickstoffzugabe erreicht, da sich in zahlreichen Versuchen mit PET-Flaschen eine solche Stickstoffbeaufschlagung als besonders vorteilhaft herausgestellt hat. Die verbesserte Verfahrenstechnik der Heißfüllung mit Druckbeaufschlagung ermöglicht es, die bei Heißabfüllung zu verwendende Prozesstechnik in einigen Aspekten zu überarbeiten, wodurch neue Varianten geliefert werden. Das Ergebnis ist ein neuer Verfahrensanspruch für die Streckblas- und Befülltechnik. Um die auftretenden Rückschrumpfungseffekte des verstrecktem PET bei Fülltemperatur zu kompensieren oder abzuschwächen, wird beim erfindungsgemäßen Verfahren der Behälter nicht über eine thermische Kristallisation der Flasche stabilisiert, sondern durch die Druckbeaufschlagung. Das heißt, dass die Druckbeaufschlagung zusätzlich zum Volumenausgleich auch zur mechanischen Stabilisierung benutzt wird. Das hat den Vorteil, dass die thermische Kristallisierung des Materials nicht mehr benötigt wird und mit konventioneller Blastechnik gearbeitet werden kann. Die Offenbarung bezieht sich sowohl auf die Herstellung von Behältern wie bspw. von PET-Flaschen als auch auf deren Befüllung. Die PET-Flaschen werden heißgefüllt und druckbeaufschlagt, wobei die Blasformtemperatur typischerweise zwischen 10-110, bevorzugt 60-95 und ganz bevorzugt zwischen 80 und 90 °C einzustellen ist. Ein bevorzugter Temperaturbereich liegt bei 80° bis 90°C.

Falls zwischen Blasstation und Füllstation mit einem Puffer für die blasgeformten Behälter gearbeitet wird, kann es von Vorteil sein, solche Behälter auszuschleusen, die eine zu lange Verweilzeit im Puffer haben, da bei einer zu langen Verweilzeit ein zu großer Anteil an inneren Spannungen im PET abgebaut wird, was jedoch im vorliegenden Zusammenhang im Interesse einer möglichst geringen Schrumpfung der befüllten, mit Gas beaufschlagten und sich abkühlenden Flaschen nachteilig ist und vermieden werden sollte.

Schließlich ist darauf hinzuweisen, dass durch die bauliche Integration der einzelnen Behälterbehandlungsstationen sowie durch die mittels der Erfindung definierten Prozessschritte eine besonders gute Eignung für die keimarme Abfüllung von Getränken in die Behälter gegeben ist.

Weitere Merkmale, Ziele und Vorteile der vorliegenden Erfindung gehen aus der folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt ein schematisches Ablaufdiagramm zur Verdeutlichung von aufeinander folgenden Verfahrensschritten bei der Heißabfüllung von Getränken in Behältern.
Fig. 2 zeigt eine schematische Schnittdarstellung eines unter Einsatz einer Reckstange blasgeformten PET-Behälters.

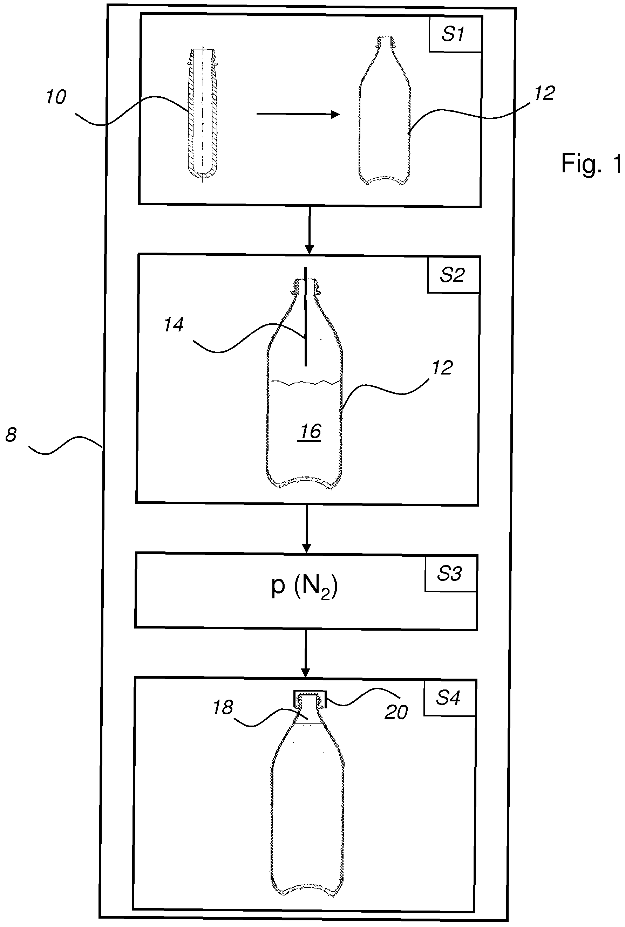

Das schematische Ablaufdiagramm der Fig. 1 zeigt aufeinander folgende Verfahrensschritte bei der Umformung von Vorformlingen zu Behältern und der nachfolgenden Heißabfüllung von Getränken in die Behälter. Das dargestellte Verfahren ermöglicht eine keimarme Befüllung von dünnwandingen und unter Wärmeeinwirkung zumindest teilweise forminstabilen Getränkebehältern bzw. PET-Flaschen. Diese PET-Flaschen werden mit einem flüssigen, heißen Getränk befüllt, wonach die Flaschen mit Stickstoff als Druckgas beaufschlagt und anschließend verschlossen werden.

In einem ersten Verfahrensschritt S1 werden Vorformlinge 10 mittels eines Blasformvorgangs zu Getränkebehältern 12 umgeformt, die in einem folgenden Verfahrensschritt S2 mittels einer geeigneten Fülleinrichtung 14 mit einem heißen Getränk 16 befüllt werden. Die nach dem Blasformvorgang noch heißen Behälter 12 werden in kontrollierter Weise abgekühlt und danach dem Füllvorgang S2 zugeführt. Die Behälter 12 werden auf kurzen Wegen, insbesondere durch bauliche und/oder konstruktive Integration einer Blasstation mit einer nachgeordneten Füllstation, geblasen, gefördert und mit der heißen Flüssigkeit 16 befüllt. Ggf. kann es von Vorteil sein, in diesem Zusammenhang darauf zu achten, dass die Flaschen 12 in der gleichen Teilung bleiben, was für die Gewährleistung konstanter Füll- und Schrumpfungsbedingungen von Vorteil ist. Die bauliche und/oder konstruktive Integration kann auch als eine "Blockung" von Blasmaschine und Füller bezeichnet werden.

Im folgenden Verfahrensschritt S3 wird die im oberen Bereich des Behälters 12 befindliche Luft mittels einer Befüllung mit flüssigem oder gasförmigem Stickstoff verdrängt, wodurch gleichzeitig die mechanische Stabilität des Behälters 12 nach dem Abkühlen der Flüssigkeit 16 gewährleistet werden kann.

Im folgenden Verfahrensschritt S4 folgt die Verschließung der mit der heißen Flüssigkeit 16 befüllten und mit flüssigem bzw. unter Druck verflüssigtem Druckgas 18 beaufschlagten Behälter 12 mit einem Verschlussdeckel 20. Nach der Verschließung der Behälter 12 folgt eine langsame Verdampfung des Druckgases 18, wobei der Druck in der Flasche zunimmt. Die auf diese Weise befüllten Behälter 12 können nach einer Abkühlphase und ggf. einer Zwischenlagerung einer Verpackungs- und/oder Lagerlogistik zugeführt werden.

Als Druckgas 18 kann im Verfahrensschritt S3 insbesondere gasförmiger oder flüssiger Stickstoff (N2) verwendet werden. Der Stickstoff sorgt dafür, dass in den Behältern 12 nach dem Abkühlen kein Unterdruck herrscht, so dass sich die relativ dünnwandigen und/oder biegeweichen Behälter 12 nicht durch den Unterdruck in unerwünschter Weise verformen. Die das Füllgut bildende Flüssigkeit wird typischerweise mit einer Temperatur größer als 75 °C in die Behälter 12 gefüllt. Das beschriebene Verfahren eignet sich besonders für Fülltemperaturen des abzufüllenden Getränks zwischen ca. 85 °C und 92 °C. Der Fülldruck des nach dem Befüllen der Behälter 12 mit Flüssigkeit 16 eingebrachten Druckgases 18 kann ca. 2 bar oder mehr betragen, so dass der innere Überdruck der abgekühlten Behälter 12 geringfügig über dem Umgebungsdruck der Atmosphäre liegt.

Mit der Bezugsziffer 8 ist in Fig. 1 eine Behälterbehandlungsvorrichtung bezeichnet, welche die für die Durchführung der oben beschriebenen Verfahrensschritte S1 bis S4 erforderlichen Verarbeitungsmodule in baulich integrierter Weise beinhaltet, was durch den die Verarbeitungsmodule umgreifenden Rahmen charakterisiert ist. So umfasst die Behälterbehandlungsvorrichtung 8 zumindest eine Behälterformungsstation zur Umformung der Vorformlinge 10 zu Getränkebehältern 12 mittels eines Blasformverfahrens (Verfahrensschritt S1), eine Behälterfüllstation mit der Fülleinrichtung 14 zur Befüllung der Behälter 12 mit heißer Flüssigkeit 16 (Verfahrensschritt S2), eine Begasungsstation zur Beaufschlagung der befüllten Behälter 12 mit dem Druckgas 18 (Stickstoff; Verfahrensschritt S3), und eine Verschließeinrichtung zur druck- und luftdichten Verschließung der Behälter 12 mit dem Verschlussdeckel 20 (Verfahrensschritt S4). Gemäß dem beschriebenen Ausführungsbeispiel der Offenbarung sind die Behälterformungsstation und die Behälterfüllstation baulich und/oder konstruktiv in der beschriebenen Weise integriert, wodurch erreicht wird, dass die Behälter 12 zwischen den Behälterbehandlungsstationen eine kontrollierte Abkühlung erfahren. Dies hat den besonderen Vorteil, dass die Behälter 12 in exakt kontrollierbarer Weise schrumpfen, wodurch weitgehend konstante Füllhöhen eingehalten werden können. Weiterhin lassen sich durch die bauliche Integration der Behälterbehandlungsvorrichtung 8 hygienische Vorteile erzielen, da auf dem sehr kurzen Weg zwischen der Behälterformung und dem Befüllen die Gefahr von Verunreinigungen deutlich reduziert werden kann.

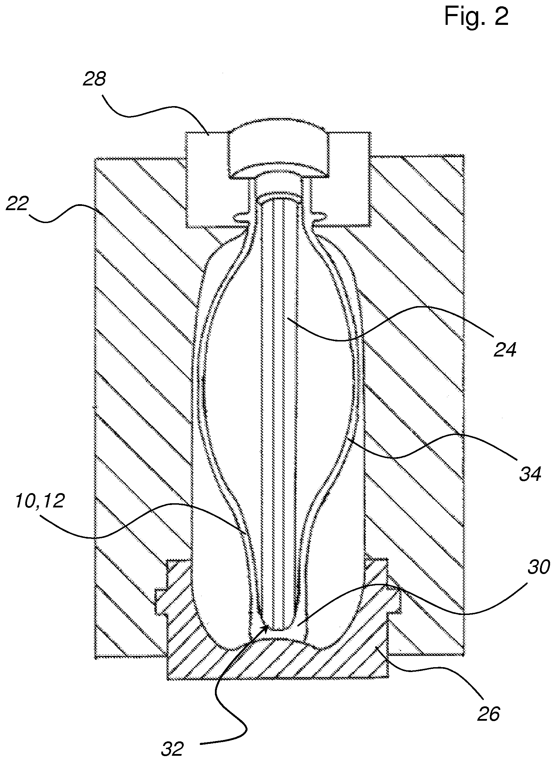

Die schematische Längsschnittansicht der Fig. 2 verdeutlicht eine Ausführungsvariante einer Behälterformung mittels einer Blasform 22 und einer entlang der Längserstreckungsrichtung des Vorformlings 10 bzw. des Behälters 12 beweglichen Recktstange 24. Die mehrteilige Blasform 22 weist einen an sich bekannten Aufbau mit mindestens zwei schalenartigen Hälften sowie einem damit klemmbaren Bodenteil 26 und einem Kopfteil 28 auf, der zur Fixierung des Vorformlings 10 während des Formungsvorgangs sowie des fertig geformten Behälters 12 dient. Wie zuvor bereits erwähnt, ist beim offenbarten Behälterbehandlungsverfahren vorgesehen, dass die Vorformlinge 10 bzw. Behälter 12 während des Blasformvorgangs mittels der flüssigkeits- oder gasgekühlten und/oder mit Reckstange 24 behandelt und gereckt werden. Es ist vorgesehen, dass ein Flüssigkeits- oder Gasaustritt im Wesentlichen an einer zum Boden 30 des zu formenden Behälters 12 gerichteten Stirnseite 32 der Reckstange 24 erfolgt. Auf diese Weise wird im Wesentlichen nur der Boden 30 des Behälters 12 gekühlt, während die Seitenwände 34 die während des Blasformvorgangs herrschende hohe Temperatur beibehalten können.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen, wobei die Erfindung durch die Merkmale des Anspruchs 1 definiert ist.

### Bezugszeichenliste

- 8: Behälterbehandlungsvorrichtung
- 10: Vorformling
- 12: Behälter
- 14: Fülleinrichtung
- 16: Flüssigkeit, Getränke
- 18: Druckgas
- 20: Verschlussdeckel
- 22: Blasform
- 24: Reckstange
- 26: Bodenteil
- 28: Kopfteil
- 30: Boden
- 32: Stirnseite
- 34: Seitenwand
- S1: erster Verfahrensschritt
- S2: zweiter Verfahrensschritt
- S3: dritter Verfahrensschritt
- S4: vierter Verfahrensschritt

## Patentansprüche

1. Verfahren zum Herstellen und Befüllen von dünnwandingen und/oder unter Wärmeeinwirkung zumindest teilweise forminstabilen PET-Flaschen (12) mit geringer Wärmebeständigkeit, bei dem die PET-Flaschen (12) durch Blasformen von Vorformlingen (10) hergestellt und die nach dem Blasformvorgang noch warmen PET-Flaschen (12) auf einem Transportweg zum Füllvorgang abgekühlt werden, anschließend mit einem flüssigen, heißen Füllgut (16) befüllt, danach mit einem Druckgas (18) beaufschlagt und anschließend verschlossen werden, wobei zwischen Blasmaschine und Füller kein Puffer eingesetzt wird und jede PET-Flasche (12) in der gleichen Zeit zum Füller übergeben wird, wobei die Vorformlinge (10) und die daraus geformten PET-Flaschen (12) während des Blasformens mit einer Blasformtemperatur beaufschlagt werden, die in einem Bereich von 80 bis 90 °C liegt.

2. Verfahren nach Anspruch 1, bei dem die Blasform über ein Kanalsystem von flüssigem Temperiermedium, das insbesondere im Wesentlichen durch Wasser gebildet ist, durchströmt wird.

3. Verfahren nach Anspruch 1 oder 2, bei dem die PET-Flaschen (12) unmittelbar nach dem Blasformen dem Füllvorgang zugeführt werden.

4. Verfahren nach einem der Ansprüche 1 bis 3, bei dem die PET-Flaschen (12) auf kurzen Wegen, insbesondere durch bauliche und/oder konstruktive Integration einer Blasstation mit einer nachgeschalteten Füllstation, geblasen, gefördert und mit der heißen Flüssigkeit (16) befüllt werden.

5. Verfahren nach einem der Ansprüche 1 bis 4, bei dem die PET-Flaschen (12) während des Blasformvorgangs mittels einer flüssigkeitsgekühlten und/oder mit Flüssigkeit gespülten Reckstange (24) oder mittels einer gasgekühlten und/oder mit Gas gespülten Reckstange (24) behandelt und gereckt werden.

6. Verfahren nach Anspruch 5, bei dem ein Flüssigkeits- oder Gasaustritt im Wesentlichen an einer zum Boden (30) der zu formenden PET-Flasche (12) gerichteten Stirnseite (32) der Reckstange (24) erfolgt.

7. Verfahren nach einem der Ansprüche 1 bis 6, bei dem als Druckgas (18) gasförmiger oder flüssiger Stickstoff verwendet wird.

8. Verfahren nach einem der Ansprüche 1 bis 7, bei dem das flüssige Füllgut (16) mit einer Temperatur größer 60 °C, insbesondere mit einer Temperatur größer als 75 °C in die PET-Flasche (12) gefüllt wird.

9. Verfahren nach einem der Ansprüche 1 bis 8, bei dem der Fülldruck mit eingebrachtem Druckgas (18) mehr als 2 bar beträgt.

## Claims

1. A method for manufacturing and filling PET bottles (12) with low heat resistance that have thin walls and/or at least partially unstable shapes under the influence of heat wherein the PET bottles (12) are manufactured by blow molding of preforms (10) and the PET bottles (12), which are still warm after being blow molded, are cooled when being transported to the filling machine, then filled with a hot liquid filling product (16), next pressurized with a compressed gas (18) and then sealed, whereby no buffer is used between the blow molding machine and the filling machine, and each PET bottle (12) is transferred to the filling machine in the same time period, whereby the preforms (10) and the PET bottles (12) molded therefrom are pressurized during blow molding at a blow molding temperature in a range of 80°C to 90°C.

2. The method as recited in claim 1 wherein a liquid temperature-regulating medium consisting, in particular, substantially of water flows through the blow mold via a duct system.

3. The method as recited in claim 1 or 2 wherein the PET bottles (12) are sent directly to the filling operation after blow molding.

4. The method as recited in one of the claims 1 to 3 wherein the PET bottles (12) are blown, conveyed and filled with the hot liquid (16) within short distances, in particular through design and/or structural integration of a blow molding station with a downstream filling station.

5. The method as recited in one of the claims 1 to 4 wherein the PET bottles (12) are treated and drawn during the blow molding operation with the aid of a drawing rod (24), which is liquid-cooled and/or through which liquid flows or which is gas-cooled and/or through which gas flows.

6. The method as recited in claim 5 wherein a liquid or gas outlet is provided essentially on an end face (32) of the drawing rod (24) facing the bottom (30) of the PET bottle (12) to be molded.

7. The method as recited in one of the claims 1 to 6 wherein gaseous or liquid nitrogen is used as compressed gas (18).

8. The method as recited in one of the claims 1 to 7 wherein the liquid filling product (16) is filled into the PET bottle (12) at a temperature above 60°C, in particular at a temperature above 75°C.

9. The method as recited in one of the claims 1 to 8 wherein the filling pressure when the compressed gas (18) is introduced is more than 2 bar.

## Revendications

1. Procédé de fabrication et de remplissage de bouteilles en PET (12) à paroi mince et/ou au moins en partie instables en forme sous l'effet de la chaleur et présentant une faible résistance à la chaleur, dans lequel les bouteilles en PET (12) sont produites par moulage par soufflage de préformes (10) et les bouteilles en PET (12) encore chaudes après l'opération de moulage par soufflage sont refroidies sur un chemin de transport vers l'opération de remplissage, sont remplies ensuite d'un produit de remplissage (16) liquide chaud, puis elles sont soumises à un gaz comprimé (18) et sont fermées ensuite, dans lequel aucun tampon n'est utilisé entre la machine de soufflage et la remplisseuse et chaque bouteille en PET (12) est transférée à la remplisseuse dans le même temps, dans lequel, durant le moulage par soufflage, lesdites préformes (10) et les bouteilles en PET (12) formées à partir de celles-ci sont soumises à une température de moulage par soufflage qui se situe dans une plage allant de 80 à 90 °C.

2. Procédé selon la revendication 1, dans lequel le moule de soufflage est traversé, via un système de canaux, de milieu liquide à tempérer qui est constitué en particulier pour l'essentiel par de l'eau.

3. Procédé selon la revendication 1 ou 2, dans lequel les bouteilles en PET (12) sont amenées à l'opération de remplissage immédiatement après le moulage par soufflage.

4. Procédé selon l'une quelconque des revendications 1 à 3, dans lequel les bouteilles en PET (12) sont soufflées, transportées et remplies du liquide (16) chaud sur de courts chemins, en particulier en intégrant de manière constructive un poste de soufflage avec un poste de remplissage monté en aval.

5. Procédé selon l'une quelconque des revendications 1 à 4, dans lequel, durant l'opération de moulage par soufflage, les bouteilles en PET (12) sont traitées et étirées au moyen d'une barre d'étirage (24) refroidie par liquide et/ou rincée avec du liquide ou au moyen d'une barre d'étirage (24) refroidie par gaz et/ou rincée avec du gaz.

6. Procédé selon la revendication 5, dans lequel une sortie de liquide ou de gaz se fait pour l'essentiel sur une face frontale (32) de la barre d'étirage (24), qui est orientée vers le fond (30) de la bouteille en PET (12) à mouler.

7. Procédé selon l'une quelconque des revendications 1 à 6, dans lequel de l'azote gazeux ou liquide est utilisé en tant que gaz comprimé (18).

8. Procédé selon l'une quelconque des revendications 1 à 7, dans lequel le produit de remplissage (16) liquide est versé dans la bouteille en PET (12) à une température supérieure à 60 °C, en particulier à une température supérieure à 75 °C.

9. Procédé selon l'une quelconque des revendications 1 à 8, dans lequel la pression de remplissage avec du gaz comprimé (18) introduit est supérieure à 2 bars.
